# EUROPEAN PATENT APPLICATION

(11) **EP 2 840 278 A1**
(43) Date of publication of application: **25.02.2015**
(21) Application number: 13778483.1
(22) Date of filing: 19.04.2013
(51) Int. Cl.: F16D 55/14, F16D 55/18, F16D 65/14, F16D 65/22

(54) **FRICTION BRAKE DEVICE**

(30) Priority: 20.04.2012 JP 2012097111
(71) Applicant: Toyota Jidosha Kabushiki Kaisha, Toyota-shi, Aichi 471-8571 (JP)
(72) Inventor: ISONO, Hiroshi, Aichi 4718571 (JP)
(74) Representative: Winter, Brandl, Fürniss, Hübner, Röss, Kaiser, Polte - Partnerschaft mbB
(86) International application number: PCT/JP2013/061683
(87) International publication number: WO 2013/157646

(57) **Abstract**

A friction brake device 10 having: a brake rotor 12 which has a main rotor 20 and a sub-rotor 22 which are spaced apart from each other along a rotation axis 18 and extend around the rotation axis over the entire circumference, and a cylindricalpart 20B integrally connecting their outer peripheral portions of the main rotor and the sub-rotor; first and second friction members 14 and 16 which are supported between the main rotor 20 and the sub-rotor 22 by a stationary member 28 so as to relatively displace along the rotation axis 18 and extend annularly around the rotation axis; and pressing devices 34 and 46 which press the first and second friction members 14 and 16 against the main rotor 20 and the sub-rotor 22, respectively.

## Description

### TECHNICAL FIELD

The present invention relates to a friction brake device and, more particularly, to a friction brake device which generates friction force by pressing a friction member against a brake rotor.

### BACKGROUND ART

In friction brake devices for vehicles such as automobiles, a pair of friction members is pressed against a disk part of a brake rotor on its opposite sides thereof by a pressing device and braking force is generated by the friction engagements by the members. The pair of friction members is supported by a caliper partially bridging over the outer peripheral portion of the brake rotor on opposite sides of the brake rotor, and the caliper is also supported by the caliper.

An example of this type of brake devices is described in the under-mentioned patent citation 1, which corresponds to an application filed by the same applicant as the present application. In particular, in the brake device described in the patent citation, the pair of friction members is supported so as to swing relative to the caliper. The friction members are not only pressed against the side surfaces of the disk part of the brake rotor, but are pressed against the inner surface of the cylindrical part provided on the outer peripheral portion of the brake rotor by swinging relative to the caliper. Consequently, according to this type of brake devices, as compared to where a pair of friction members is simply pressed against a disk part of a brake rotor on its opposite sides thereof, higher braking force can be generated.

As another example of friction brake devices, a brake device has already been known in which pressing force for pressing a friction member against a brake rotor is increased by means of pressing a friction member against a brake rotor and generating a wedge action through the use of rotational torque which the friction member receives from the brake rotor. For example, in the under-mentioned patent citation 2, a friction brake device is described which has a self-force-increasing mechanism that generates wedge action. According to such a brake device, in comparison with a brake device in which braking force is not increased by a wedge action, higher braking force can be generated without increasing the pressing force with which the friction members are pressed against the rotor disk by pressing devices.

### CITAION LIST

Patent Literature 1: Japanese Patent Application Laid-open Publication No. H8-121509
Patent Literature 2: Japanese Patent Application Laid-open Publication No. 2004-225902

### SUMMARY OF INVENTION

### TECHNICAL PROBLEM

In conventional friction brake devices, a pair of friction members extends only in a limited circumferential area which is a small part of the entire circumference of the brake rotor, and accordingly, the area in which pressing and frictional engagement by a pair of friction members are conducted is only a small part of the entire circumference of the brake rotor. As a result, during the operation of the brake device, the area in which compressive load by the pressing of a pair of friction members acts cyclically moves in a circumferential direction as the brake rotor rotates.

Consequently, in the event where the thickness of the disk part of the brake rotor is not even in a circumference direction or eveness in thickness has been lost due to temporal change, particularly in a brake device in which a pressing device is a general hydraulic piston-cylinder device, the piston vibrates and the pressure in the cylinder chamber vibratingly varies. In a brake device in which a pressing device is an electromagnetic actuator, a control electric current vibratingly varies due to a vibrating change in counter electromotive force. On those account, braking torque which a pair of friction members affords to a brake rotor cyclically changes, which may tend to cause brake vibrations such as flutter, vibration of a brake pedal, vibration of a vehicle body and the like to occur.

In particular, in a brake device in which a pressing device is provided on one side of a brake rotor and a pair of friction members is pressed against the opposite surfaces of the disk part of the brake rotor, the disk part of the brake rotor is liable to locally be deformed cyclically. For that reason, a brake squeal is likely to occur due to the vibration of the brake rotor at a low natural frequency.

Reaction force of the pressing force of the pressing device acts on the caliper. If the caliper is deformed by the reaction force thus acting, braking force cannot effectively be generated, The caliper should have strength and size enough to suppress such deformation. Consequently, in order to generate high braking force, a caliper cannot help becoming large in size, and the problem cannot be solved by the configuration described in the above-mentioned patent citation 1.

In such a conventional friction brake device which generates a wedge action as described in the above-mentioned patent citation 2, as a member for supporting the reaction force of a pressing force is provided separately from the pressing device, the brake device cannot help being complicated in structure. As the increase of the pressing force by the pressing device and the wedge action is conducted on only one side of the brake rotor, braking force cannot adequately be increased.

A primary object of the present invention is to provide a friction brake device which can generate high braking force while depressing increasing in size of brake device and complication in structure, and which is not liable to suffer from brake squeal and brake vibration in comparison with a conventional friction brake device.

### SOLUTION TO PROBLEM AND ADVANTAGEOUS EFFECTS

The present invention provides a friction brake device comprising: a brake rotor having first and second disk parts which are spaced apart from each other along a rotation axis and extend annularly around saying rotation axis, and a connection part which integrally connects the outer peripheral portions of the first and second disk parts; and first and second friction members which extend annularly around the rotation axis between the first and second disk parts and are supported by a stationary member so that the friction members can displace relative to the first and second disk parts along the rotation axis but the rotations of the friction members around the rotation axis are restricted; a pressing device disposed between the first and second friction members which presses the first and second friction members against the first and second disk parts, respectively, and transmits the reaction force that one of the friction members receives from one of the disk parts to the other disk part by way of the other friction member.

According to the configuration, the first and second friction members extend annularly around the rotation axis similarly to the first and second disk parts, and are pressed against the first and second disk parts, respectively, by the pressing device. Thus, the first and second friction members are all times in contact with the first and second disk parts, respectively, over the entire circumference around the rotation axis.

Consequently, it is possible to effectively prevent the area in which compressive load by the pressing of a pair of friction members acts from cyclically moving in a circumferential direction as the brake rotor rotates during the operation of the brake device. The first and second friction members are supported by the stationary member so that the friction members can displace relative to the first and second disk parts along the rotation axis, and are pressed against the associated disk parts in a condition where the friction members are in contact with the disk parts over the entire circumference.

Thus, a risk can effectively be reduced that brake vibrations such as flutter, vibration of a brake pedal, vibration of a vehicle body and the like occur due to the cyclical change in braking torque which the pair of friction members affords to the brake rotor. A risk can also effectively be reduced that the disk part is locally deformed cyclically due to the pressing and frictional engagement being conducted at only a small part of the entire circumference of the brake rotor, which enables to effectively reduce the risks that the brake rotor vibrates and the brake squeal occurs due to the vibration of the brake rotor.

According to the above-mentioned configuration, the brake rotor has the first and second disk parts which are spaced apart from each other along the rotation axis and are integrally connected at their outer peripheral portions, and the first and second friction members are disposed between the first and second disk parts. The first and second friction members are pressed against the first and second disk parts, respectively, by the pressing device disposed between the friction members, and the reaction force that one of the friction members receives are transmitted from one of the disk parts to the other disk part by way of the other friction member.

A caliper is not required which supports the pair of friction members on the opposite sides of the disk part and the pressing devices and bears the reaction force of the pressing force of the pressing devices. As the first and second disk parts extend around the rotation axis over the entire circumference, the rotation members can be enhanced in rigidity as compared to where a caliper only extends arcuately around the rotation axis. The pressing device is positioned between the first and second disk parts together with the first and second friction members, the structures of conduits and the likes required to actuate the pressing device can be simplified as compared to where two pressing devices are disposed on the opposite sides of a brake disk. In addition, as the pressing device is positioned between the first and second friction members and the reaction force that one of the friction members receives are transmitted from one of the disk parts to the other disk part by way of the other friction member, pressing force can be increased through the effective use of the reaction force.

Consequently, in comparison with a conventional disk type friction brake device, the rotation members can be enhanced in rigidity while suppressing increasing in size of brake device,complication in the structure and cost up, which enables to enhance the rigidity and the durability of the friction brake device and to generate higher braking force.

The above-mentioned configuration may be such that: the pressing device conducts the pressing of the first and second friction members and the transmission of the reaction force at a plurality of positions spaced apart circumferentially around the rotation axis.

According to the configuration, the pressing of the first and second friction members and the transmission of the reaction force by the pressing device are conducted at a plurality of positions spaced apart circumferentially around the rotation axis. Accordingly, as compared to where the pressing of the friction members and the transmission of the reaction force are conducted only at a small part of the entire circumference around the rotation axis, the number of the areas can be increased where the pressing of the friction members and the transmission of the reaction force are conducted and the areas can be decentralized in a circumferential direction, which enables to reduce the pressure by the pressing which is received by the disk part. Therefore, in comparison with a conventional disk type friction brake device, abrasion of the disk part can be reduced and the durability of the brake device can be enhanced.

In addition, as compared to where the pressing of the friction members and the transmission of the reaction force are conducted only at a small part of the entire circumference around the rotation axis, a possibility can be reduced that the pressure by the pressing received by the disk part at its various portions cyclically varies as the disk part rotates. This also reduces the risk that bake vibration or brake squeal occurs in comparison with a conventional disk type friction brake device.

The above-mentioned configuration may be such that: the first friction member is supported by the stationary member so as to rotate relative to the second friction member around the rotation axis, and the second friction member is supported by the stationary member so as not to rotate around the rotation axis; the pressing device includes a pressing force control mechanism that controls the force with which at least the first friction member is pressed against the first disk part, and a plurality of force transmission mechanisms which are disposed around the rotation axis as spaced apart from each other and transmits the force between the first and second friction members; and the force transmission mechanisms trasnsmit the rotational torque around the rotaion axis between the first and second friction members, transform the rotational torque into the force acting in the direction of separating the first and second friction members from each other along the rotaion axis through the use of the wedge action generated by means of the first and second friction members being relatively rotated around the rotation axis, and transmit the reaction force received by the first and second friction members mutually between the first and second friction members.

According to the configuration, the first friction member is supported by the stationary member so as to rotate relative to the second friction member around the rotation axis, and the second friction member is supported by the stationary member so as not to rotate around the rotation axis. The force with which at least the first friction member is pressed against the first disk part is controlled by the pressing force control mechanism of the pressing device. Accordingly, when at least the first friction member is pressed against the first disk part and the first friction member engages with the first disk part, the first friction member receives rotational torque from the first disk part and rotates around the rotation axis relative to the second friction member.

According to the configuration, the rotational torque transmitted from the first friction member to the second friction member by the force transmission mechanisms is borne by the stationary member. The force by the rotational torque is transformed into the force acting in the direction of separating the first and second friction members from each other along the rotaion axis through the use of the wedge action by the force transmission mechanisms, and the reaction force received by the first and second friction members are mutually transmitted between the first and second friction members. In addition, the force transmission mechanisms are disposed around the rotation axis as spaced apart from each other.

Consequently, the force with which the first and second friction members are pressed against the first and second disk parts, respectively, can be incrased over the entire circumference around the rotation axis through the effective use of the rotational torque which the first friction member receives from the first disk part. In addition, the force with which the first and second friction members are pressed against the first and second disk parts, respectively, can be incrased over the entire circumference around the rotation axis through the effective use of the reaction force which the friction member receive. Therefore, the braking force which the brake device generates can be increased without increasing the force with which the pressing device presses at least the first friction member against the first disk part.

The above-mentioned configuration may be such that: the pressing force control mechanism includes a solenoid which is supported by the first friction member and annularly extends around the rotation axis, and controls the force with which the first friction member is pressed against the first disk part by the electromagnetic force generated by means of the solenoid being electrically energized.

According to the configuration, the electromagnetic force can be controlled by controlling the control electric current supplied to the solenoid, which enables to control the force with which the first friction member is pressed against the first disk part. Thus, the friction brake device according to the present invention can be applied to a by-wire type brake device.

The solenoid is supported by the first friction member and annularly extends around the rotation axis. Consequently, as compared to, for example, where a plurality of solenoids are provided around the rotation axis as spaced from each other, the brake device can be simplified in structure and the first friction member can be pressed against the first disk part more evenly over the entire circumference around the rotation axis.

The above-mentioned configuration may be such that: the pressing force control mechanism includes a piston-cylinder device which is supported by the first friction member and annularly extends around the rotaion axis; the piston-cylinder device has a cylinder chamber and a piston which engages with the first friction member at the tip end; and the pressing force control mechanism controls the pressing force with which the first and second friction members are pressed against the first and second disk parts, respectively, by means of the pressure in the cylinder chamber being increased and decreased.

According to the configuration, the force with which the first and second friction members are pressed against the first and second disk parts, respectively, can be controlled by controlling the pressure in the cylinder chamber. Thus, the friction brake device according to the present invention can be applied to a pressure-control type brake device such as a hydraulic brake device.

The piston-cylinder device is supported by the second friction member and annularly extends around the rotaion axis. Consequently, as compared to, for example, where a plurality of piston-cylinder devices are provided around the rotation axis as spaced from each other, the brake device can be simplified in structure and the first friction member can be pressed against the first disk part more evenly over the entire circumference around the rotation axis. In addition, the piston-cylinder device is supported by the second friction member that is supported by the stationary member so as not to rotate around the rotation axis. Consequently, as compared to where the piston-cylinder device is supported by the first friction member that is supported by the stationary member so as to rotate around the rotation axis, the brake device can be simplified in structure.

The above-mentioned configuration may be such that: the pressing device conducts the pressing of the first and second friction members and the transmission of the reaction force over the entire circumference around the rotation axis.

The pressing of the first and second friction members and the transmission of the reaction force by the pressing device are conducted over the entire circumference around the rotation axis. Accordingly, as compared to where the pressing of the friction members and the transmission of the reaction force are conducted only at a small part of the entire circumference around the rotation axis, the square measure of the areas can be increased where the pressing of the friction members and the transmission of the reaction force are conducted, which enables to reduce the pressure by the pressing which is received by the disk part. Therefore, in comparison with a conventional disk type friction brake device, abrasion of the disk part can be reduced and the durability of the brake device can be enhanced.

In addition, as compared to where the pressing of the friction members and the transmission of the reaction force are conducted only at a small part of the entire circumference around the rotation axis, a possibility can be reduced that the pressures caused by the pressing and received by the disk part at its various portions cyclically vary as the disk part rotates. This also reduces the risk that bake vibration or brake squeal occurs in comparison with a conventional disk type friction brake device.

The above-mentioned configuration may be such that: the pressing force control mechanism includes a piston-cylinder device which is supported by one of the first and second friction members and annularly extends around the rotaion axis; the piston-cylinder device has a cylinder chamber and a piston which engages with the other of the first and second friction members at the tip end; and the piston-cylinder device presses the first and second friction members against the first and second disk parts, respectively, by means of the pressure in the cylinder chamber being increased and devreased.

According to the configuration, the first and second friction members can simultaneously be pressed against the first and second disk parts by the piston-cylinder device, and the reaction force generated by the pressing can be transmitted by way of the piston-cylinder device. In addition, the force with which the first and second friction members are pressed against the first and second disk parts, respectively, can simultaneously be controlled by controlling the pressure in the cylinder chamber.

The above-mentioned configuration may be such that: the ranges in radial direction where the first and second friction members frictionally engage with the first and second disk parts are the same to each other.

According to the configuration, the ranges in radial direction where the first and second friction members press the first and second disk parts and receive the reaction force are as well the same to each other. Consequently, as compared to where these ranges are different from each other, internal stresses in the brake device can be reduced, which enables to enhance the durability of the brake device.

The above-mentioned configuration may be such that: the force transmission mechanisms have first and second opposed surfaces provided on the first and second friction members, respectively; the first and second opposed surfaces have areas inclined in the same direction relative to a virtual plane perpendicular to the rotation axis; and by means of the cooperation of the first and second opposed surfaces, the force transmission mechanisms transmit the rotational torque around the rotation axis between the first and second friction members, transform the rotational torque into the force acting in the direction of separating the first and second friction members from each other along the rotation axis, and transmit the reaction force received by the first and second friction members mutually between the first and second friction members.

According to the configuration, when the first friction member rotates relative to the second friction member around the rotation axis, a wedge action can be generated by the cooperation of the first and second opposed surfaces. Accordingly, the rotational torque can effectively be transformed into the force acting in the direction of separating the first and second friction members from each other along the rotation axis, and the reaction force received by the first and second friction members can effectively be transitted mutually between the first and second friction members.

The above-mentioned configuration may be such that: the first friction member is supported by the stationary member by way of the second friction member so as to rotate relative to the second friction member around the rotation axis.

The above-mentioned configuration may be such that: the pressure in the cylinder is controlled by way of internal passage formed in the stationary member.

The above-mentioned configuration may be such that: the force transmission mechanism have the first and second opposed surfaces provided on the first and second friction members, respectively, and a rolling body between the opposed surfaces, and the transmission of the rotational torque, transforming of the force and the transmission of the reaction force are conducted between the inclined areas of the first and second opposed surfaces by way of the rolling body.

The above-mentioned configuration may be such that: the connection part is integrally formed with one of the first and second disk parts and the other of the first and second disk parts is integrally coupled to the connection part by coupling devices which can release the coupling.

The above-mentioned configuration may be such that: the brake rotor cooperates with a non-rotating member to define a closed space which accommodates the first and second friction members and the pressing device. Incidentaly, the closed space may be filled with a lubricant.

The above-mentioned configuration may be such that: when the force controlled by the pressing force control mechanism is 0, the first and second friction members are in their normal positions and the force transmission mechanism does not generate any force separating the first and second friction members from each other.

The above-mentioned configuration may be such that: as the relative rotation from the normal positions as reference positions caused by the rotational torque increases, the force transmission mechanism increases the force separating the first and second friction members from each other.

The above-mentioned configuration may be such that: the first and second opposed surfaces have areas where the inclination relative to the virtual plane is 0, and the force controlled by the pressing force control mechanism is 0, the first and second friction members are positioned in the normal positions by means of the areas having inclination of 0 opposing to each other along the rotation axis.

The above-mentioned configuration may be such that: the first and second opposed surfaces on both sides of the areas having inclination of 0 are inclined in the directions opposite to each other relative to the vertical plane.

The above-mentioned configuration may be such that: the brake device is a brake device for a vehicle, the connection part is integrally formed with one of the first and second disk parts, and the brake device is coupled with a rim portion of a vehicle wheel at the one disk part.

### BRIEF DESCRIPTION OF THE DRAWINGS

Fig. 1 is a partial sectional view showing a section of a first embodiment of the friction brake device according to the present invention which is structured as an electromagnetic brake device for a vehicle, as cut along a section passing through a rotation axis.
Fig. 2 is a partial front view showing the first embodiment as viewed from right side in Fig. 1.
Fig. 3 is a partial sectional view which is along III-III in Fig. 2, showing a force transmission mechanism with respect to a situation where a first and second pressing members are in their normal positions.
Fig. 4 is a partial sectional view showing the force transmission mechanism with respect to a situation where the first and second pressing members are relatively displaced.
Fig. 5 is a partial sectional view showing a section of a second embodiment of the friction brake device according to the present invention which is structured as a hydraulic brake device for a vehicle, as cut along a section passing through a rotation axis.
Fig. 6 is a partial front view showing the second embodiment as viewed from right side in Fig. 5.
Fig. 7 is a partial sectional view showing a section of a third embodiment of the friction brake device according to the present invention which is structured as a hydraulic brake device for a vehicle, as cut along a section passing through a rotation axis.
Fig. 8 is a partial sectional view showing a section of a fourth embodiment of the friction brake device according to the present invention which is structured as a hydraulic brake device for a vehicle, as cut along a section passing through a rotation axis.
Fig. 9 is a partial sectional view showing a section of a fifth embodiment of the friction brake device according to the present invention which is structured as an electromagnetic brake device for a vehicle, as cut along a section passing through a rotation axis.
Fig. 10 is a partial front view showing the fifth embodiment as viewed from right side in Fig. 9.
Fig. 11 is an enlarged sectional view which is along XI-XI in Fig. 9.
Fig. 12 is an explanatory view showing the principle of increasing pressing force in the brake device according to the present invention.
Fig. 13 is a partial sectional view showing a modification of the cam surface of a force transmission mechanism.
Fig. 14 is a partial sectional view showing another modification of the cam surface of a force transmission mechanism.

### MODE FOR CARRYING OUT THE INVENTION

The present invention will now be described in detail with respect to preferred embodiments by referring to the accompanying drawings.

### First Embodiment

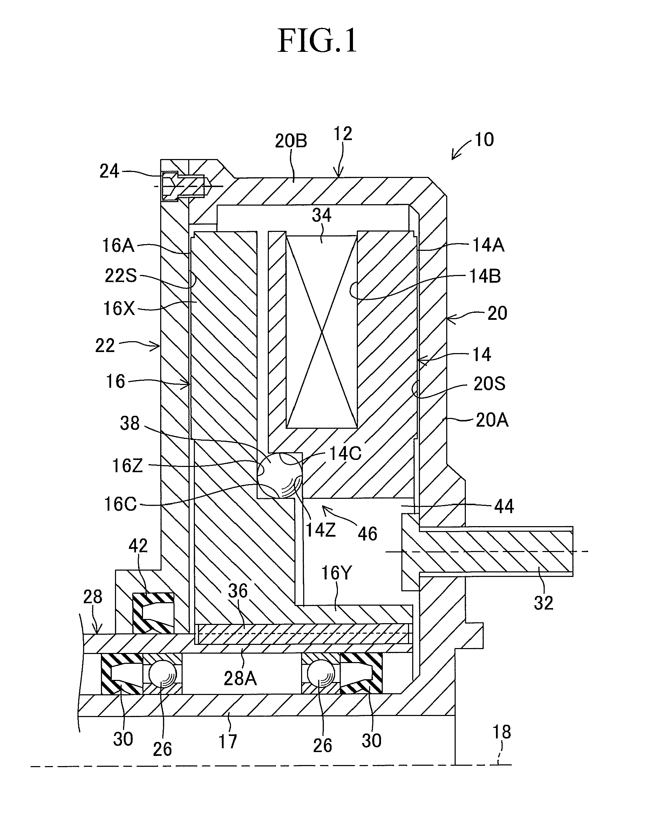

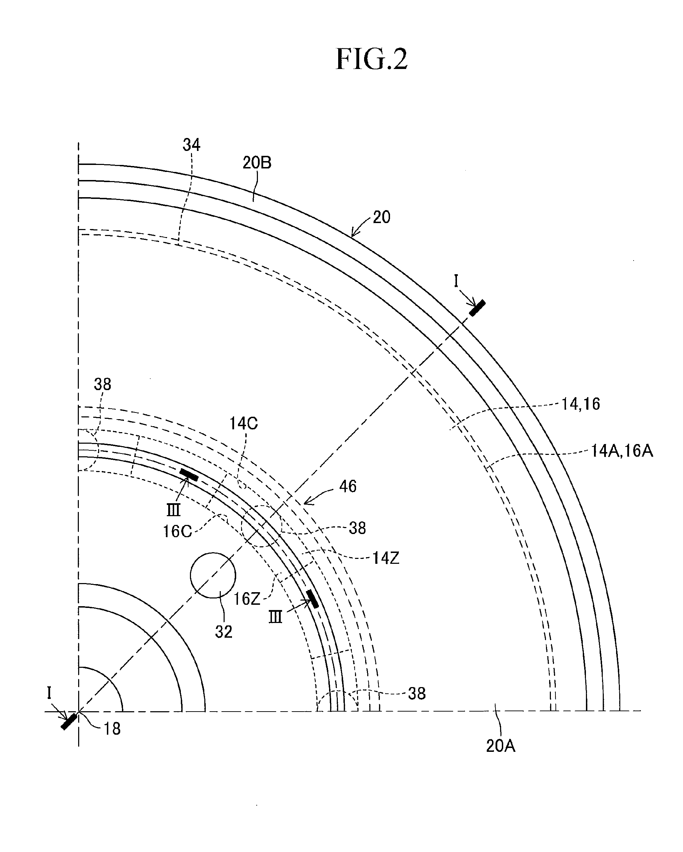

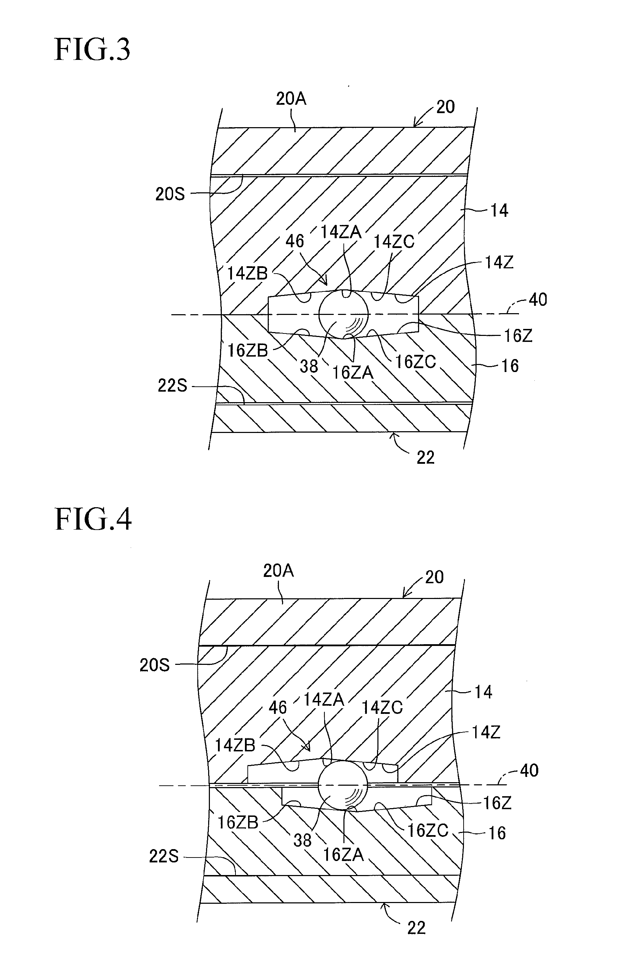

Fig. 1 is a partial sectional view showing a section of a first embodiment of the friction brake device according to the present invention which is structured as an electromagnetic brake device for a vehicle, as cut along a section passing through a rotation axis. Fig. 2 is a partial front view showing the first embodiment as viewed from right side in Fig. 1. Fig. 3 is a partial sectional view which is along III-III in Fig. 2. Notably, Fig. 1 is a sectional view which is along I-I in Fig. 2.

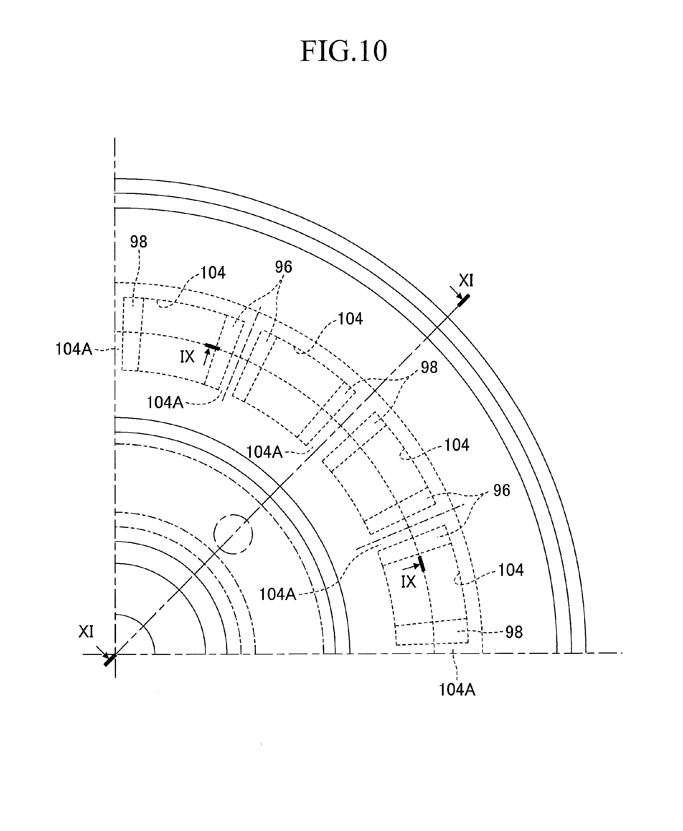

In Fig. 1, 10 denotes a whole of the brake device. The brake device 10 has a brake rotor 12, a first pressing member 14 and a second pressing member 16. The brake rotor 12 rotates around a rotation axis 18 together with a rotating shaft 17 of a vehicle wheel, not shown. In particular, in the illustrated embodiment, the brake rotor 12 has a main rotor 20 which is integral with the rotating shaft 17 and a sub-rotor 22 which rotates integrally with the main rotor. The main rotor 20 and the first pressing member 14 are made from a metal having paramagnetism but the second pressing member 16 and the sub-rotor 22 may be made from a metal having no paramagnetism.

The main rotor 20 has a disk part 20A and a cylindrical part 20B which are spaced apart from each other along the rotation axis 18. The disk part 20A is integrally connected at the inner peripheral portion to the rotating shaft 17 and extends like an annular plate perpendicularly to the rotation axis 18 around the rotation axis 18. The cylindrical part 20B is integrally connected to the outer peripheral portion of the disk part 20A and extends cylindrically around the rotation axis 18. The sub-rotor 22 extends like an annular plate perpendicularly to and around the rotation axis 18 and is coupled at the outer peripheral portion to an end of the cylindrical part 20B opposite to the disk part 20A by a plurality of bolts 24.

It is to be noted that the disk part 20A and the sub-rotor 22 have the same thickness and the thickness of the cylindrical part 20B is smaller than those of the disk part 20A and the sub-rotor 22. However, since the cylindrical part 20B extends cylindrically around the rotation axis 18, it has a rigidity higher that those of the disk part 20A and the sub-rotor 22.

Thus, the disk part 20A and the sub-rotor 22 serve as first and second disk parts, respectively, which extend like anannular plate perpendicularly to and around the rotation axis 18 and are spaced apart along the rotation axis 18. The cylindrical part 20B serves as a connection part which cooperates with the bolts 24 to integrally connect the outer peripheral portions of the disk part 20A and the sub-rotor 22. The disk part 20A, the cylindrical part 20B and the sub-rotor 22 form a staple-like sectional shape which opens radially inwardly as viewed in a radial section passing through the rotation axis 18. The opposed surfaces of the disk part 20A and the sub-rotor 22 define a first friction surface 20S and a second friction surface 22S, respectively, which extend perpendicularly to and around the rotation axis 18 and are parallel to each other.

The rotating shaft 17 is rotatably supported around the rotation axis 18 by a sleeve part 28A of a wheel carrier member 28 serving as a stationary member through a pair of ball bearings 26. The space defined by the pair of ball bearings 26, the rotating shaft 17 and the sleeve part 28A is filled with lubricant such as grease. A pair of seal members 30 are located on both sides in axial direction of the pair of ball bearings 26 and seal the space between the rotating shaft 17 and the sleeve part 28A so that dust and muddy water do not enter the ball bearings 26.

Although not shown in the figure, the disk part 20A of the main rotor 20 is adapted to be integrally coupled to a rim part of the vehicle wheel by four bolts and nuts 32 screwed thereto which are spaced apart by 90° around the rotation axis 18. Consequently, the rotating shaft 17 and the brake rotor 12 (the main rotor 20 and the sub-rotor 22) rotate around the rotation axis 18 together with the vehicle wheel.

The first pressing member 14 has a ring shape which extends around the rotation axis 18 over the entire circumference. The side surface of the first pressing member 14 which opposes to the first friction surface 20S of the disk part 20A is integrally formed with a first frictional engagement portion 14A which serves a first frictional engagement member. The first frictional engagement portion 14A extends like a ring strip around the rotation axis 18 over the entire circumference. The first pressing member 14 has ring groove 14B which extends around the rotation axis 18 over the entire circumference and opens radially outwardly. A solenoid 34 is positioned in the ring groove 14B and annually extends around the rotation axis 18.

Although not shown in the figure, supply of electricity to the solenoid 34 is controlled by an electronic control unit. Notably, braking operation amount of a driver such as depressing force on a brake pedal may be detected and the control electric current supplied to the solenoid 34 may be controlled so that the electric current increases as the braking operation amount increases.

A second pressing member 16 has a ring plate part 16X and a cylindrical part 16Y which are integral with each other. The ring plate part 16X extends around the rotation axis 18 over the entire circumference. The outer peripheral of the ring plate part 16X is spaced apart from the first pressing member 14 and is positioned between the first pressing member 14 and the sub-rotor 22. The side surface of the ring plate part 16X opposite to the first pressing member 14 is integrally formed with a second frictional engagement portion 16A which serves as a second frictional engagement member. The second frictional engagement portion 16A extends like a ring strip around the rotation axis 18 over the entire circumference as opposed to the second friction surface 22S.

It is to be noted that the first and second pressing members 14 and 16 may be produced by, for example, powder metallurgy so that the first frictional engagement portion 14A and the second frictional engagement portion 16A are integrally formed with the first and second pressing members 14 and 16, respectively. Alternatively, the first frictional engagement portion 14A and the second frictional engagement portion 16A may be formed by adhering a ring strip made from frictional material to a side surface of the ring plate part by means of adhesive or other means. Furthermore, although the first frictional engagement portion 14A and the second frictional engagement portion 16A are made from the same frictional material, they may be made from different frictional materials from each other. While the frictional material may be any frictional material having a good durability, it is preferably a frictional material of ceramics having also a good heat-resisting property.

The second pressing member 16 mates with the sleeve part 28A of a wheel carrier member 28 with a small clearance. A key 36 is inserted into key grooves which are provided on the inner surface of the cylindrical part 16Y and the outer surface of the sleeve part 28A and extend along the rotation axis 18. Consequently, the second pressing member 16 is supported by the wheel carrier member 28 so that the member cannot rotate around the rotation axis 18 but can displace along the rotation axis 18.

The ring plate part 16X has a column-like shoulder 16C which faces radially outwardly on the side of the first pressing member 14, which in turn has a column-like shoulder 14C which radially opposes to the shoulder 16C. The shoulders 14C and 16C have radially spaced sections at eight positions which are equally spaced apart from each other around the rotation axis 18. A ball 38 is positioned at each section between the shoulders 14C and 16C. The balls 38 are made from a substantially rigid material such as a metal. Consequently, the first pressing member 14 is supported by the second pressing member 16 via balls 38 so that the first pressing member can rotate around the rotation axis 18 and can displace along the rotation axis 18.

The first and second pressing members 14 and 16 have eight cam surfaces 14Z and 16Z, respectively, in the areas between the shoulders 14C and 16C. The cam surfaces can engage with the associated balls 38. As shown in Fig. 3, the cam surfaces 14Z and 16Z are provided at the circumferential positions where the associated balls 38 are positioned, and extend in arc shapes each having a center in the rotation axis 18.

As shown in Fig. 3, the cam surfaces 14Z has a curved section 14ZA opening toward the second pressing member 16 and planar inclined sections 14ZB and 14ZC extending continuously from the curved section on both sides of the curved section. The inclined sections 14ZB and 14ZC are inclined relative to a virtual plane 40 extending perpendicularly to the rotation axis 18 so that as the distance from the curved section 14ZA increases, the inclined sections approach the the second pressing member 16. In similar, the cam surfaces 16Z has a curved section 16ZA opening toward the first pressing member 14 and planar inclined sections 16ZB and 16ZC extending continuously from the curved section on both sides of the curved section. The inclined sections 16ZB and 16ZC are inclined relative to the virtual plane 40 so that as the distance from the curved section 16ZA increases, the inclined sections approach the first pressing member 14.

In the illustrated embodiment, as shown in Fig. 3, the inclined sections 14ZB and the like have the same inclination in magnitude. In consequence, the inclined sections 14ZB and 16ZC, and 14ZC and 16ZB which oppose to each other in a radial direction of each ball 38 are inclined in the same direction relative to the virtual plane 40 and extend in parallel to each other.

In particular, in the illustrated embodiment, as shown in Fig. 1, the inner peripheral portion of the sub-rotor 22 mates with the sleeve part 28A of the wheel carrier member 28. A seal member 42 is positioned between the inner peripheral portion of the the sub-rotor 22 and the sleeve part 28A and extends around the rotation axis 18 over the entire circumference.

Accordingly, the main rotor 20 and the sub-rotor 22 cooperate with the rotating shaft 17, the wheel carrier member 28 and the seal member 42 to form a closed space 44. The first pressing member 14, the second pressing member 16, the solenoid 34 and the balls 38 are positioned in the closed space 44 and the latter is filled with a lubricant. Consequently, frictional force is not substantially generated between the balls and the shoulders 14C and 16C and between the balls 38 and the cam surfaces 14Z and 16Z.

It is to be noted that as shown in Fig. 1, when no electric control current is supplied to the solenoid 34, the first and second pressing members 14 and 16 are positioned in normal positions shown in Fig. 3. When the two pressing members are positioned in the normal positions, the distance between the surfaces of the first frictional engagement portion 14A and the second frictional engagement portion 16A assumes a minimum value and no fore is generated which force to separate the two pressing members from each other. Consequently, the first frictional engagement portion 14A and the second frictional engagement portion 16A do not substantially frictionally engage with the friction surface 20S of the disk part 20A and the second friction surface 22S of the sub-rotor 22.

In the first embodiment, when a braking operation is made by a driver, an electric control current corresponding the braking operation amount is supplied to the solenoid 34 and attractive force acts between the first pressing member 14 and the disk part 20A which is the electromagnetic force generated by the solenoid 34. As a result, the first pressing member 14 is pressed against the disk part 20A, which makes the first frictional engagement portion 14A engage with the friction surface 20S of the disk part 20A. Consequently, the solenoid 34 cooperates with the first pressing member 14 and the disk part 20A to function as a part of a pressing unit which presses the first pressing member 14 against the disk part 20A, and the first pressing member 14 functions as a first friction member which frictionally engages with the the disk part 20A.

If the wheel not shown in the figure is rotating, the first pressing member 14 receives rotational torque around the rotation axis 18 which is generated by he frictional force between the first frictional engagement portion 14A and the friction surface 20S of the disk part 20A, and rotates relative to the second pressing member 16 around the rotation axis 18. As a result, the first and second pressing members 14 and 16 relatively rotate in the opposite directions to each other as shown in Fig. 4, which makes the cam surfaces 14Z and 16Z approach each other. However, since the balls 38 cannot compressively deform, so called wedge effect is generated, which makes the first and second pressing members 14 and 16 remove from each other along the rotation axis 18.

That is, the balls 38 and the cam surfaces 14Z, 16Z cooperate with each other to displace the first and second pressing members 14 and 16 in the direction of separating them from each other along the rotation axis 18. Besides, the balls 38 and the cam surfaces 14Z, 16Z cooperate with each other to transmit rotational torque acting around the rotation axis 18 of the first pressing member 14 to the second pressing member 16, and to transform the rotational torque into the force separating the two pressing members from each other. Furthermore, the balls 38 and the cam surfaces 14Z, 16Z transmit reaction force mutually between the two pressing members, the reaction force being generated by means of frictional engagement members being pressed against the associated friction surfaces by the pressing members.

Thus, the balls 38 and the cam surfaces 14Z, 16Z define a force transmitting mechanism 46 which conducts transmission of rotational torque between the first and second pressing members 14 and 16, generation of the force separating the two pressing members from each other along the rotation axis 18, and transmission of the reaction force. The first frictional engagement portion 14A and the second frictional engagement portion 16A are pressed against the friction surface 20S of the disk part 20A and the friction surface 22S of the sub-rotor 22, respectively, by the action of the force transmitting mechanism 46, and thereby frictionally engage with the associated friction surfaces. In addition, the balls 38 and the cam surfaces 14Z, 16Z cooperate with each other to function as a positioning mechanism which positions the first and second pressing members 14 and 16 at their normal positions.

Therefore, the second pressing member 16 cooperates with the first pressing member 14 and the force transmitting mechanism 46 to function as a second friction member which frictionally engages with the sub-rotor 22. The solenoid 34, the first pressing member 14, the second pressing member 16 and the force transmitting mechanism 46 cooperate with each other to function as pressing devices which press the first and second pressing members 14 and 16 against the disk part 20A and the sub-rotor 22, respectively. In addition, the ball 38 and cam surfaces 14Z, 16Z cooperate with each other to function as a positioning mechanism which positions the first and second pressing members 14 and 16 at their normal positions.

It is to be noted that the rotational torque is proportional to the attractive force of the electromagnetic force generated by the solenoid 34 and the force separating the first and second pressing members 14 and 16 from each other is proportional to the rotational torque. Consequently, the pressing force with which the first and second pressing members 14 and 16 act against the disk part 20A and the sub-rotor 22, respectively, is proportional to the braking operation amount of a driver.

The second pressing member 16 is prevented from rotating around the rotation axis 18 relative to the wheel carrier member 28 by the key 36 and the key groove receiving the key. In consequence, the wheel carrier member 28 functions as a rotational torque bearing member bearing the rotational torque which the second pressing member 16 receives from the first pressing member 14.

According to the first embodiment, the disk part 20A, the cylindrical part 20B and the sub-rotor 22 form a staple-like sectional shape which opens radially inwardly in a radial section passing through the rotation axis 18. The pressing members 14 and 16 and the like are positioned between the disk part 20A and the sub-rotor 22, and are adapted to press the pressing members 14 and 16 and the like against the disk part and the sub-rotor in the direction of separating them from each other. In addition, the frictional engagement portions 14A and 16A of the pressing members 14 and 16 are always in frictionally contact with the friction surface 20S of the disk part 20A and the friction surface 22S of the sub-rotor 22.

Consequently, in comparison with a conventional friction brake device in which pressing and friction contact are conducted at a small part of the entire circumference, the possibilities can be reduced that braking torque which a pair of friction engagement members afford to the brake rotor 12 cyclically varies. Therefore, it is possible to effectively reduce the possibility that brake vibrations such as flutter, vibration of brake pedal, vibration of a vehicle body and the like occur due to the cyclical change in braking torque.

In comparison with a conventional friction brake device in which pressing and frictional contact are conducted at a small part of the entire circumference, the possibilities can be reduced that a brake rotor locally deforms cyclically and/or pressing force against a brake rotor varies cyclically, which enable to effectively reduce risks of vibration and abnormal abrasion of a brake rotor and/or brake squeal. Notably, these advantageous effects can be obtained as well in the under-described other embodiments.

According to the first embodiment, the pressing members 14 and 16 and the like are positioned between the disk part 20A and the sub-rotor 22, and the pressing members 14 and 16 are pressed against the disk part 20A and the sub-rotor 22 in the direction of separating them from each other. The reaction force generated by the press of the pressing members 14 and 16 are transmitted to the other of the pressing members via the force transmitting mechanism 46. Consequently, higher braking force can efficiently be generated by the friction force between the frictional engagement portions 14A, 16A and the friction surfaces 20S, 22S also through the effective use of the reaction force.

A caliper is not required which extends to bridge between the opposite sides of the brake rotor, supports the friction members and the pressing devices, and bears the reaction force of the pressing force of the pressing devices as in a conventional disk type brake device. No enhancement of the caliper in rigidity is required. Since the disk part 20A and the sub-rotor 22 extend around the rotation axis 18 over the entire circumference, the brake rotor 12 can be enhanced in rigidity in comparison with a caliper which extends only in an arc shape around the rotation axis. Therefore, in comparison with the brake device where the reaction force generated by pressing a friction engagement member against a friction surface by means of a pressing member is borne by another member other than the pressing member, the structure of the brake device can be simplified and an increase in size of the brake device can be avoided.

In particular, according to the first embodiment, the rotational torque around the rotation axis 18 is transmitted from the first pressing member 14 to the second pressing member 16 by the force transmitting mechanism 46 and is transformed into the force separating the two pressing members by the wedge action of the force transmitting mechanism 46. The rotation force generated by the press of the pressing members 14 and 16 is transmitted to the other of the pressing members via the force transmitting mechanism 46.

Thus, it is possible to effectively utilize the rotational torque of the brake rotor 12 to increase the pressing force by means of the wedge action being generated by the force transmitting mechanism 46, and to increase pressing force by means of transmission of reaction force conducted via the force transmitting mechanism 46. Consequently, higher braking force can be generated as compared to where no force transmitting mechanism 46 is provided. Notably, this advantageous effect can be obtained as well in the under-described second embodiment.

### Second Embodiment

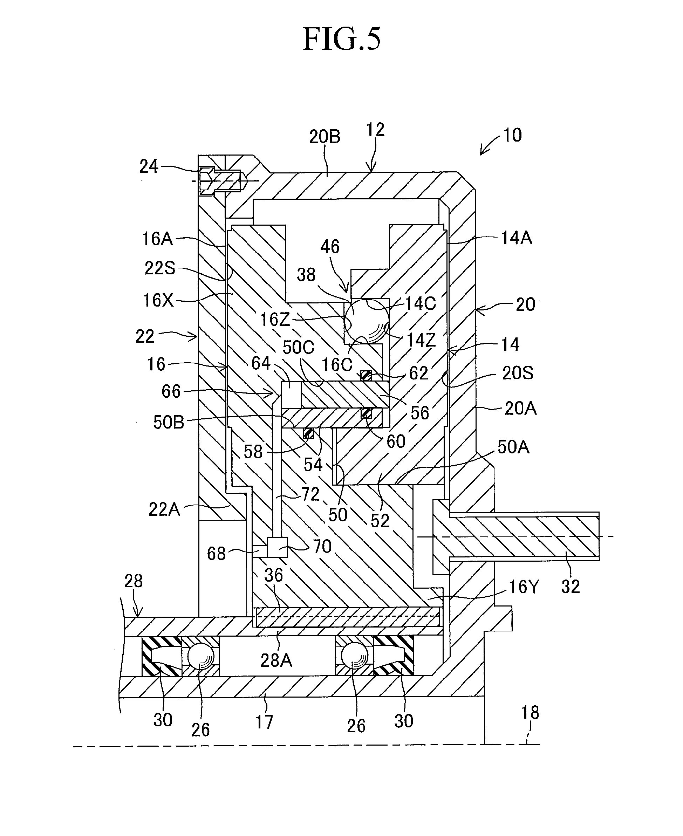

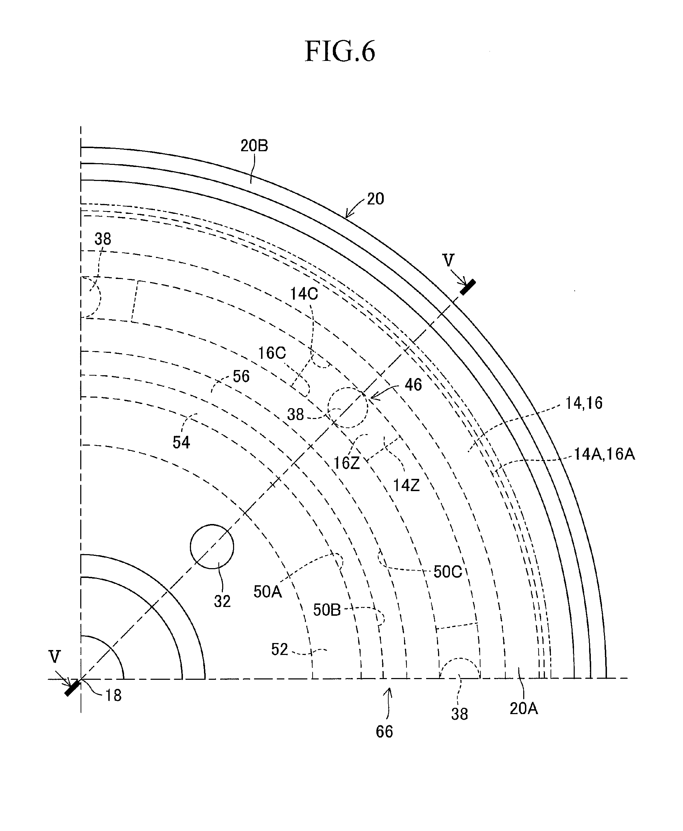

Fig. 5 is a partial sectional view showing a section of a second embodiment of the friction brake device according to the present invention which is structured as a hydraulic brake device for a vehicle, as cut along a section passing through a rotation axis. Fig. 6 is a partial front view showing the second embodiment as viewed from right side in Fig. 5. Notably, Fig. 5 is a sectional view which is along V-V in Fig. 6. In Figs. 5 and 6, the same members as those shown in Figs. 1 and 2 are denoted by the same reference numbers as in Figs. 1 and 2.

In the second embodiment, the inner peripheral portion of the sub-rotor 22 does not engage with the wheel carrier member 28, and, on the radially outer side of the wheel carrier member 28, has a cylindrical part 22A extending along the rotation axis 18 toward the disk part 20A. The tip end of the cylindrical part 22A is spaced apart from the second pressing member 16.

The second pressing member 16 has a stepped cylindrical hole 50 on the side of the first pressing member 14. The cylindrical hole 50 extends around the rotation axis 18 over the entire circumference and along the rotation axis 18. The first pressing member 14 has a cylindrical part 52 at its inner peripheral portion, which extends around the rotation axis 18 over the entire circumference and along the rotation axis 18. The cylindrical part 52 mates with a radially inwardly positioned cylindrical outer surface 50A of the cylindrical hole 50 so that the part can rotate around the rotation axis 18 and can relatively displace along the rotation axis 18.

A cylindrical body 54 mates substantially snugly with a radially outwardly positioned cylindrical outer surface 50B of the cylindrical hole 50. The cylindrical body 54 extends around the rotation axis 18 over the entire circumference and along the rotation axis 18. A cylindrical piston 56 is positioned between the cylindrical body 54 and a cylindrical inner surface 50C of the cylindrical hole 50. The piston 56 extends as well around the rotation axis 18 over the entire circumference and along the rotation axis 18. The piston 56 mates substantially snugly with the cylindrical body 54 and the cylindrical inner surface 50C so that the piston can displace along the rotation axis 18 relative to the cylindrical body 54 and the second pressing member 16.

The clearance between the radially outwardly positioned cylindrical outer surface 50B and the cylindrical body 54 is sealed by an O-ring seal 58. The clearances between the cylindrical body 54 and the piston 56 and between the cylindrical inner surface 50C and the piston 56 are sealed by O-ring seals 60 and 62, respectively. Thus, the second pressing member 16, the cylindrical body 54 and the piston 56 define a hydraulic piston-cylinder device 66 having a cylinder chamber 64 which extends around the rotation axis 18 over the entire circumference.

The second pressing member 16A is provided with a port 68 which is communicatingly connected with a master cylinder (not shown). The port 68 communicates with an annular passage 70 which extends around the rotation axis 18 over the entire circumference within the second pressing member 16. The annular passage 70 in turn is communicatingly connected with the cylinder chamber 64 by a plurality of radial passages 72 which extends radially within the second pressing member 16. Thus, the cylinder chamber 64 is supplied with a master cylinder pressure by way of the port 68, the annular passage 70 and the radial passages 72.

Thus, the hydraulic piston-cylinder device 66 functions as a part of pressing control mechanism which presses both the first and second pressing members 14 and 16 against the disk part 20A and the sub-rotor 22, respectively, in the opposite directions to each other. As the pressing force corresponds to the pressure in the cylinder chamber 64, i.e., a master cylinder pressure, it corresponds to a braking operation amount of a driver.

In the third embodiment, a force transmitting mechanism 46 is also provided which has the same structure as the force transmitting mechanism 46 in the first embodiment. It is to be noted that although the force transmitting mechanism 46 is located on the radially outer side relative to the hydraulic piston-cylinder device 66, it may be located on the radially inner side relative to the hydraulic piston-cylinder device 66. Notably, the third embodiment is structured in other aspects similarly to the above-described second embodiment.

Upon the first pressing member 14 is pressed against the disk part 20A by the pressing force of the hydraulic piston-cylinder device 66 and frictionally engages with the friction surface 20S of the disk part 20A, the pressing member receives rotational torque from the disk part 20A. In similar, upon the second pressing member 16 is pressed against the sub-rotor 22 by the pressing force of the hydraulic piston-cylinder device 86 and frictionally engages with the second friction surface 22S of the sub-rotor 22, the pressing member receives rotational torque from the sub-rotor 22.

As the first pressing member 14 is supported by the second pressing member 16 so as to rotate around the rotation axis 18, the first pressing member rotates around the rotation axis 18. On the other hand, as the second pressing member 16 is supported so that it can relatively displace along the rotation axis 18 but cannot rotate around the rotation axis 18, the second pressing member does not rotate around the rotation axis 18. Accordingly, the first and second pressing members 14 and 16 rotate relatively to each other around the rotation axis 18.

Thus, as in the first embodiment, a part of the rotational torque transmitted to the first pressing member 14 is transformed by the force transmitting mechanism 46 into the force which presses the first and second pressing members 14 and 16 so as to separate them from each other along the rotation axis 18. Consequently, this increases the force pressing the first and second pressing members 14 and 16 against the disk part 20A and the sub-rotor 22, respectively. The force that the first and second pressing members 14 and 16 receive from the disk part 20A and the sub-rotor 22, respectively, are transmitted to the other pressing member, and thereby act as effective pressing force.

As is apparent from the above description, in this embodiment, the piston-cylinder device 66 functions as a pressing device which cooperates with the first and second pressing members 14 and 16 to press these pressing members against the disk part 20A and the sub-rotor 22, respectively. As in the first embodiment, the first and second pressing members 14 and 16 function as the first and second friction members which engage with the disk part 20A and the sub-rotor 22, respectively.

The pressing force that is generated by the piston-cylinder device 66 is proportional to a braking operation amount of a driver, and the pressing force which is increased by the force transmitting mechanism 46 is proportional to the pressing force that is generated by the piston-cylinder device 66. As a result, the pressing force which presses the first and second pressing members 14 and 16 against the disk part 20A and the sub-rotor 22, respectively, is proportional to a braking operation amount of the driver.

Thus, according to the second embodiment, operations similar to those of the above-described first embodiment can be obtained except that both the first and the second pressing members 14 and 16 are pressed against the disk part 20A and the sub-rotor 22, respectively, in the opposite directions to each other by the piston-cylinder device 66. Consequently, advantageous effects similar to those of the above-described first embodiment can be obtained.

In particular, according to the second embodiment, the cylinder chamber 64 of the piston-cylinder device 66 is formed on the side of the second pressing member 16 which does not rotate relative to the wheel carrier member 28 that is a stationary member. Consequently, as compared to where a cylinder chamber is formed on the side of the first pressing member 14 which rotates relative to the wheel carrier member 28, the structure of the brake device 10 can be simplified. Notably, the same goes in the under-described third embodiment.

### Third Embodiment

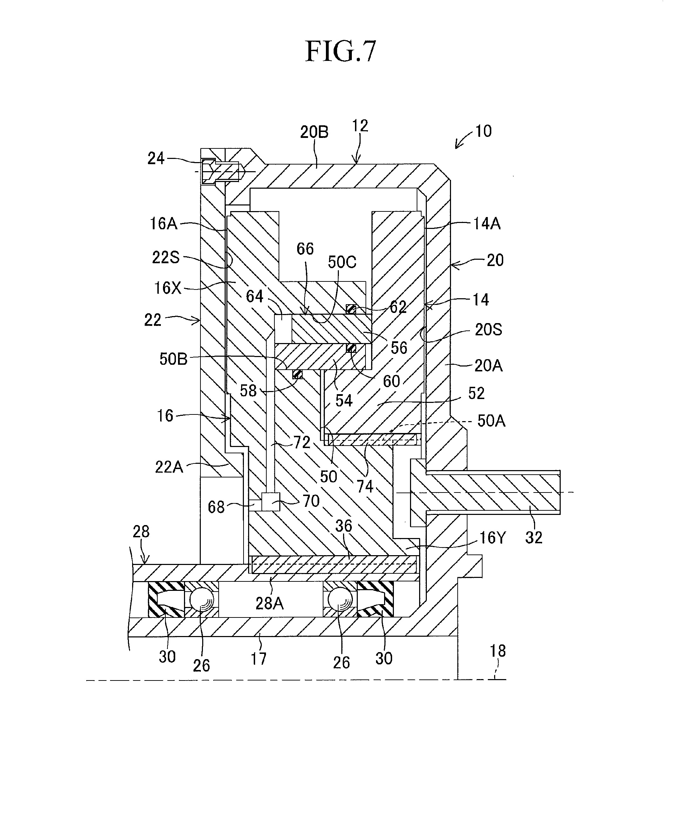

Fig. 7 is a partial sectional view showing a section of a third embodiment of the friction brake device according to the present invention which is structured as a hydraulic brake device for a vehicle, as cut along a section passing through a rotation axis. Notably, in Fig. 7, the same members as those shown in Figs. 5 and 6 are denoted by the same reference numbers as in the figures.

The third embodiment is a modification of the above-described second embodiment. In this embodiment, no force transmitting mechanism 46 is provided. The piston-cylinder device 66 is located radially outwardly than the piston-cylinder device in the third embodiment. In addition, the inner surface of the cylindrical part 52 of the first pressing member 14 and the cylindrical outer surface of the second pressing member 16 have key grooves extending along the rotation axis 18, in which key 74 is inserted. Consequently, the first pressing member 14 can displace relative to the second pressing member 16 along the rotation axis 18, but cannot rotate relative to the second pressing member 16 around the rotation axis 18. Notably, this embodiment is structured in other aspects similarly to the above-described second embodiment.

### Fourth Embodiment

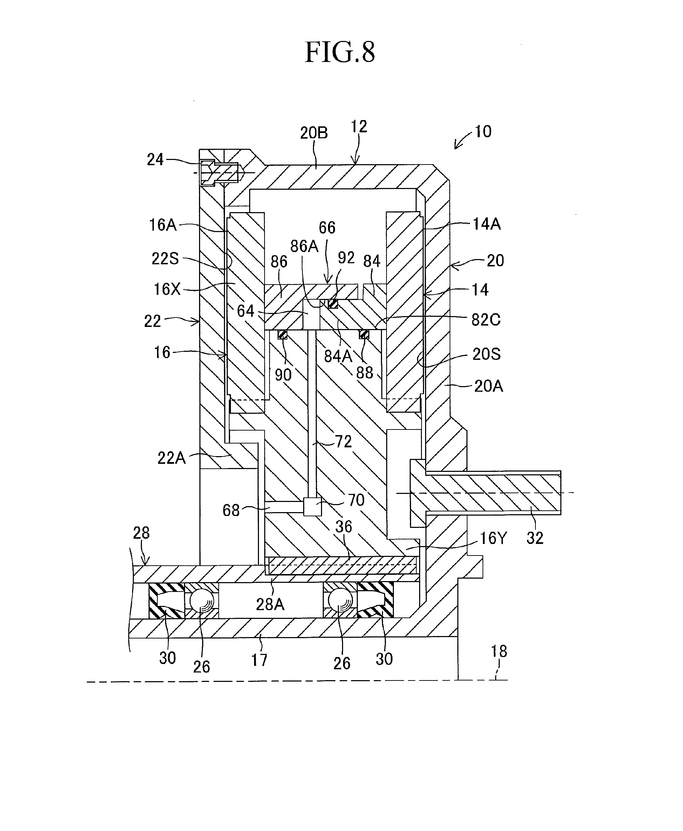

Fig. 8 is a partial sectional view showing a section of a fourth embodiment of the friction brake device according to the present invention which is structured as a hydraulic brake device for a vehicle, as cut along a section passing through a rotation axis. Notably, in Fig. 8, the same members as those shown in Figs. 5 to 7 are denoted by the same reference numbers as in the figures.

The fourth embodiment is another modification of the above-described second embodiment. In this embodiment, no force transmitting mechanism 46 is provided. Between the first and second pressing members 14 and 16 is disposed an intermediate member 82 which annularly extends around the rotation axis 18 over the entire circumference. The intermediate member 82 is coupled with a sleeve portion 28A of the wheel carrier member 28 by a key 36 at the inner peripheral portion 82X. The intermediate member 82 has cylindrical parts 82A and 82B projecting along the rotation axis 18 on the opposite sides, and these cylindrical parts extend around the rotation axis 18 over the entire circumference.

The cylindrical parts 82A and 82B are mated with the first and second pressing members 14 and 16, respectively, each having an annular plate shape. In the illustrated embodiment, spline teeth which extend along the rotation axis 18 and engage with each other are formed on the cylindrical outer surface of the cylindrical parts 82A and 82B and the cylindrical inner surface of the pressing members 14 and 16. Consequently, the first and second pressing members 14 and 16 are supported by the intermediate member 82 so that the pressing members can displace relative to the intermediate member 82 along the rotation axis 18, but cannot rotate relative to the intermediate member 82 around the rotation axis 18.

Cylindrical bodies 84 and 86 are disposed between the first and second pressing members 14 and 16, and mate with the cylindrical outer surface 82C of the intermediate member 82 so as to displace along the rotation axis 18 relative to the intermediate member 82. The cylindrical body 84 which is disposed on the side of the first pressing member 14 has a smaller diameter portion 84A on the side of the second pressing member 16. On the other hand, the cylindrical body 86 which is disposed on the side of the second pressing member 16 has a cylindrical hole 86A on the side of the first pressing member 14. The smaller diameter portion 84A mates with the cylindrical hole 86A so that the cylindrical bodies 84 and 86 can displace along the rotation axis 18 relative to each other.

The spaces between the cylindrical outer surface 82C of the intermediate member 82 and the cylindrical bodies 84 and 86 are sealed by O-ring seals 88 and 90. The space between the cylindrical body 84 and the cylindrical body 86 is sealed by an O-ring seal 92. Thus, the cylindrical bodies 84 and 86 cooperate with the intermediate member 82 to define a piston-cylinder device 66 having a cylinder chamber 64 annularly extending around the rotation axis 18, and the cylinder chamber 64 is communicatingly connected with a radial passage 72 which extends radially to the cylindrical outer surface 82C of the intermediate member 82. Notably, this embodiment is structured in other aspects similarly to the above-described third embodiment.

As is apparent from the above, according to the third and fourth embodiments, the piston-cylinder device 66 press both the the first and second pressing members 14 and 16 against the disk part 20A and the sub-rotor 22, respectively, in the opposite directions to each other. And that, as their pressing force is related to the pressure in the cylinder chamber 64 and accordingly, to a master cylinder pressure, the pressing force is related to the braking operation amount of the driver.

It is to be noted that, as described in the above, as no force transmitting mechanism 46 is provided, increasing of the pressing force is not executed by means of the rotational torque which the first and second pressing members 14 and 16 receive from the disk part 20A and the sub-rotor 22, respectively, being transformed into the force acting along the rotation axis 18. The reaction force which the first and second pressing members 14 and 16 receive from the disk part 20A and the sub-rotor 22, respectively, is transmitted to the other pressing member by way of the piston-cylinder device 66.

Therefore, according to the third and fourth embodiments, operations similar to those of the above-described first embodiment can be obtained except that increasing of the pressing forcej is not executed by the wedge action of the force transmitting mechanism 46. As the pressing force can be increased by the transmission of the reaction force conducted by way of the piston-cylinder device 66, the brake device can generate higher braking force in comparison with a conventional brake device where increasing of the pressing force is not executed by the reaction force.

### Fifth Embodiment

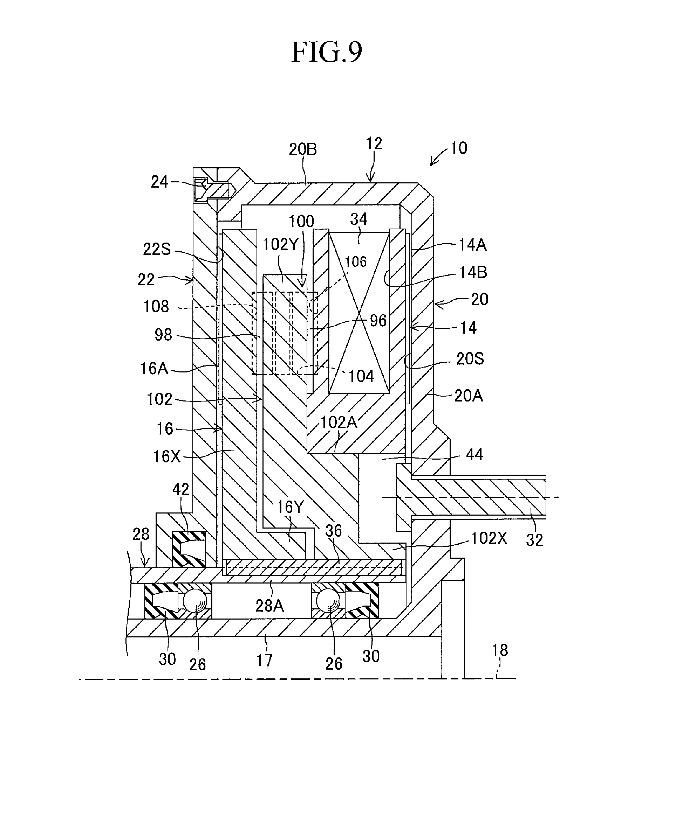

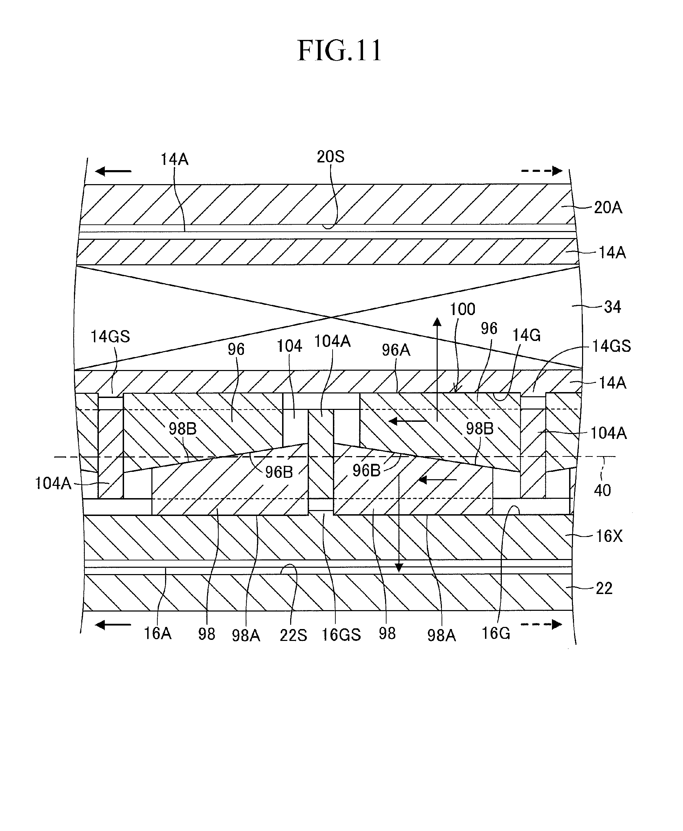

Fig. 9 is a partial sectional view showing a section of a fifth embodiment of the friction brake device according to the present invention which is structured as an electromagnetic brake device for a vehicle, as cut along a section passing through a rotation axis. Fig. 10 is a partial front view showing the fourth embodiment as viewed from right side in Fig. 9. Fig. 11 is an enlarged sectional view which is along XI-XI in Fig. 10. Notably, Fig. 9 is a sectional view which is along IX-IX in Fig. 10. In Figs. 9 to 11, the same members as those shown in Figs. 1 and 2 are denoted by the same reference numbers as in the figures.

In the fifth embodiment, an intermediate member 102 which extends annually around the rotation axis 18 over the entire circumference is disposed between the first and second pressing members 14 and 16. The intermediate member 102 is securely coupled at its inner peripheral portion 102X to the sleeve part 28A of the wheel carrier member 28 by the key 36. The intermediate member 102 has a cylindrical outer surface 102A which is aligned with the rotation axis 18 and supports the first pressing member 14 at the cylindrical outer surface 102A so that the first pressing member 14 can relatively rotate and can relatively displace along the rotation axis 18. In addition, the intermediate member 102 is spaced apart from the second pressing member 16 in the direction along the rotation axis 18.

As shown in Figs. 10 and 11, the intermediate member 102 has a annular plate part 102Y in the area radially outer than the cylindrical outer surface 102A. The annular plate part 102Y is provided with sixteen arcuate holes 104 which are equally spaced apart circumferentially by partition walls 104A. Each arcuate hole 104 extends along the rotation axis 18 penetrating through the annular plate part 102Y and extends arcuately around the rotation axis 18. The radially inner surface and the radially outer surface of each arcuate hole 104 are cylindrical extending along the rotation axis 18.

In each arcuate hole 104, the first wedge members 96 is positioned adjacently to the first pressing member 14 and the second wedge members 98 is positioned adjacently to the second pressing member 16. The wedge members 96 and 98 extend arcuately around the rotation axis 18 and fit into the associated arcuate hole 104. The circumferential length of the wedge members 96 and 98 are shorter than that of the arcuate holes 104. The radius of the cylindrical outer surface of each wedge member is slightly smaller than that of the cylindrical inner surface of the associated arcuate hole 104 and the radius of the cylindrical inner surface of each wedge member is slightly larger than that of the cylindrical outer surface of each arcuate hole 104.

The wedge members 96 and 98 project along the rotation axis 18 from the intermediate member 102 toward the first and second pressing members 14 and 16, respectively. The tip ends of the wedge members 96 and 98 are slightly tapered and is fitted into recesses 14G and 16G that are formed in the first and second pressing members 14 and 16, respectively, and extend circumferentially. The recesses 14G and 16G have the sizes and the shapes which can accommodate the tip ends of the wedge members 96 and 98 with a little clearance.

The recesses 14G and 16G are provided with stopper portions 14GS and 16GS, respectively, having a small projection height at the circumferential positions corresponding to the associated partition walls 104A. The stopper portions 14GS and 16GS divide the recesses 14G and 16G, respectively, into a plurality of circumferential areas. It is to be noted that the recesses 14G and 16G have the depth which prevents the tip ends of the wedge members 96 and 98 from slipping off from the associated recesses 14G and 16G even when the wedge members 96 and 98 displace along the rotation axis 18 relative to the first and second pressing members 14 and 16, respectively.

Thus, the wedge members 96 and 98 can rotate around the rotation axis 18 relative to the intermediate member 102, but cannot rotate around the rotation axis 18 relative to the first and second pressing members 14 and 16, respectively. Besides, the wedge members 96 and 98 can linearly displace along the rotation axis 18 relative to the intermediate member 102 and can linearly displace along the rotation axis 18 relative to the first and second pressing members 14 and 16, respectively.

It is to be noted that during non-braking operation of the brake device where the solenoid 34 is not supplied with a control electric current, the wedge members 96 and 98 are positioned at the normal positions shown in Fig. 11, and are not pressed against the first and second pressing members 14 and 16, respectively. Thus, the first and second pressing members 14 and 16 do not frictionally engage with the disk part 20A and the sub-rotor 22, respectively.

As is understood from the above, in the fifth embodiment, the wedge members 96 and 98 cooperate with the arcuate holes 104 and the partition walls 104A therebetween to define a force transmitting mechanism 106 which functions similarly to the force transmitting mechanism 100 in the first and second embodiments. Accordingly, as in the first and second embodiments, the pressing force of the first and second pressing members 14 and 16 acting against the disk part 20A and the sub-rotor 22 is increased. Notably, the fifth embodiment is structured in other aspects similarly to the above-described first to fourth embodiments.

For example, in a situation where, as shown by an arrow of a bold solid line in Fig. 11, the disk part 20A and the sub-rotor 22 are moved leftward as viewed in Fig. 11, when the solenoid 34 is supplied with the control electric current, the first pressing member 14 is pressed against the disk part 20A. As the first frictional engagement portion 14A of the first pressing member 14 frictionally engages with the disk part 20A, the first pressing member 14 is moved leftward. In consequence, the first wedge members 96 located on the right side of the partition walls 104A as spaced apart therefrom are as well moved leftward and transmit rotational torque to the associated second wedge members 98.

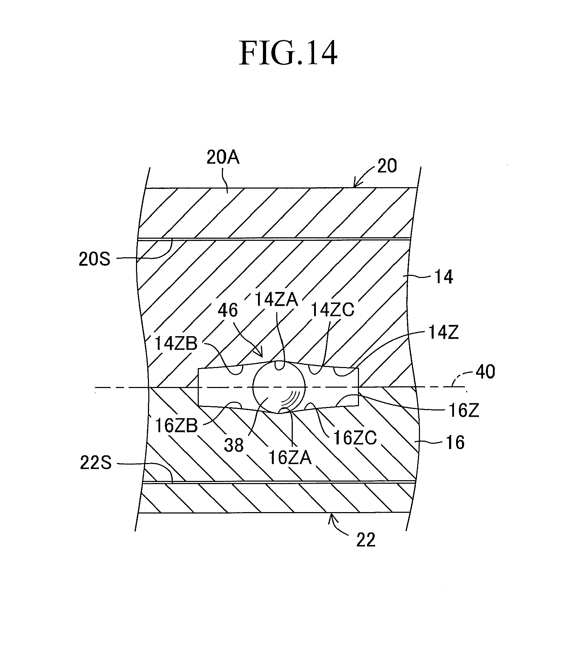

However, as the partition walls 104A are parts of the intermediate member 102 that cannot rotate around the rotation axis 18, the wedge member 98 which is located on the right side of the partition walls 104A as in contact therewith cannot freely move leftward as viewed in Fig. 14. As a result, a part of the rotational torque transformed into the force for pressing the second wedge member 98 against the second pressing member 16 and the sub-rotor 22 by means of the wedge action generated by the cooperation of the side surfaces 96B and 98B, which makes the second frictional engagement portion 16A of the second pressing member 16 frictionally engage with the sub-rotor 22. Thus, braking force is generated by the frictional engagement between the first frictional engagement portion 14A and the disk part 20A and the frictional engagement between the second frictional engagement portion 16A and the sub-rotor 22.

The reaction force which is generated by means of the first wedge members 96 pressing the disk part 20A by way of the first pressing member 14 is transmitted to the wedge member 98. Similarly, the reaction force which is generated by means of the second wedge member 98 pressing the sub-rotor 22 by way of the second pressing member 16 is transmitted to the wedge members 96. Therefore, as in the first and second embodiments, pressing force can be enhanced by effectively utilizing the reaction force and no special member is required to bear the reaction force.

Incidentlly, although the first wedge members 96 disposed on the left side of the partition walls 104A as spaced apart therefrom as well receive the force trying to move them leftward, the partition walls 104A prevent the first wedge members from moving leftward. In consequence, the first wedge members 96 cannot transmit any rotational torque to the second wedge member 98 and cannot generate any force pressing the second wedge member 98 against the second pressing member 16 and the sub-rotor 22.

Notably, in a situation where, as shown by an arrow of a broken line in Fig. 11, the disk part 20A and the sub-rotor 22 are moved rightward as viewed in Fig. 11, the same operation as above can occur. That is, except that the directions are reversed, the wedge members 96 and 98 disposed on the left side of the partition walls 104A function similarly to the wedge members 96 and 98 disposed on the right side of the partition walls 104A in a situation where the disk part 20A and the sub-rotor 22 are moved leftward as viewed in Fig. 14.

As is understood from the above, in the fifth embodiment, the force transmitting mechanism 106 including the wedge members 96 and 98 operates similarly to the force transmitting mechanism 46 in the above-described first and second embodiments. Consequently, according to the fifth embodiment, the advantageous effects substantially the same as in the first and second embodiments can be obtained.

In this embodiment, a plurality of wedge members 96 and 98 are arranged as spaced apart from each other circumferentially and the areas where the wedge members 96 and 98 conduct pressing are radially spaced apart from each other circumferentially. However, the wedge members 96 and 98 do not frictionally engage directly with the disk part 20A and the sub-rotor 22, respectively, but press the first and second pressing members 14 and 16 against the disk part 20A and the sub-rotor 22, respectively.

Accordingly, as in the other embodiments, the first and second pressing members 14 and 16 always frictionally engage with the disk part 20A and the sub-rotor 22 around the rotation axis 18 over the entire circumference. Therefore, the risk of abnormal abrasion of the frictional engagement portions, brake vibration, brake squeal and the likes can effectively be reduced.

In the illustrated embodiment, both the first pressing member 14 and the intermediate member 102 are securely coupled to the sleeve part 28A of the wheel carrier member 28. However, in the configuration in which the stopper portions 16GS are provided and the circumferential rotation of the second wedge members 98 are limited by the stopper portions, one of the first pressing member 14 and the intermediate member 102 may be rotatable around the rotation axis 18. In the configuration in which the first pressing member 14 and the intermediate member 102 are not rotatable around the rotation axis 18, the stopper portions 16GS may be omitted.

As is understood from the above, in the above-described embodiments, the frictional engagement portions 14A and 16A extend around the rotation axis 18 over the entire circumference at the same radius positions which have the centers on the rotation axis 18. In consequence, the reaction force generated by means of the frictional engagement portions and the frictional engagement members 54 and 60 being pressed by the pressing members 14 and 16 can effectively be transmitted to the other pressing member.

According to the first and fifth embodiments, the disk part 20A and the sub-rotor 22 cooperate with the rotating shaft 17, the wheel carrier member 28 and the seal member 42 to define the closed space 44, and the pressing members 14 and 16 and the like are accommodated in the closed space 44. Consequently, a risk can be reduced that muddy water and dust may enter into the brake device 10, which enables to enhance the durability of the brake device 10. The necessity of a cover or the like for restraining muddy water and dust from entering into the brake device 10 can be eliminated.

According to the first and fifth embodiments, the closed space is filled with a lubricant. Accordingly, the engagement areas around the balls38 and the frictional contact areas can be lubricated by the lubricant. Therefore, the force transmitting mechanisms 46 and 106 can smoothly operate and the pressing by the pressing members 14 and 16 on the frictional engagement portions 14A and the likes can preferably be executed. Abnormal abrasion of the members at the frictional contact areas can be restrained from occurring; heat generation and brake squeal by friction can be restrained from occurring; and the temperature rising of the members can be refrained from occurring by means of the pressing members and the like being cooled by the lubricant.

According to the above-described embodiments, the frictional engagement portions 14A and 16A which are pressed against the friction surface 20S of the disk part 20A and the friction surface 22S of the sub-rotor 22, respectively, are integrally formed with the pressing members 14 and 16. Consequently, as compared to where the frictional engagement members which are pressed against the friction surface 20S of the disk part 20A and the friction surface 22S of the sub-rotor 22 are separate from the pressing members 14 and 16, the number of parts can be reduced and the structure of the brake device can be simplified.

According to the above-described embodiments, the thickness of the cylindrical part 20B is smaller than those of the disk part 20A and the sub-rotor 22. However, the cylindrical part 20B extends cylindrically around the rotation axis 18 over the entire circumference and it has a rigidity higher than those of the disk part 20A and the sub-rotor 22.

In consequence, as compared to where the cylindrical part 20B has a rigidity lower than those of the disk part 20A and the sub-rotor 22, it is possible to reduce the deformation amount by which the disk part 20A and the sub-rotor 22 deform in the direction of separating them from each other during the operation of the brake device 10. Therefore, as compared to where the magnitude relation of the rigidities is reversed, the braking action of the brake device 10 can be enhanced.

According to the above-described embodiments, the cylindrical part 20B is integral with the disk part 20A, and the cylindrical part 20B and the disk part 20A form the main rotor 20 to which a rim part of a vehicle wheel is coupled. Consequently, as compared to where the cylindrical part 20B is a part of the sub-rotor 22 and the cylindrical part 20B is coupled to a main rotor 20 having a substantially disk shape, it is possible to enhance the rigidity of the brake rotor 12 and to enhance the attachment strength of the brake device 10 coupled to a rim part of a vehicle wheel.

According to the first and fifth embodiments, the brake device 10 can be applied to a by-wire type brake device, and according to the second to fourth embodiments, the brake device 10 can be applied to a hydraulic brake device.

In the above-described first, second and fifth embodiments, the first pressing member 14 is rotatable around the rotation axis 18 and the second pressing member 16 is not rotatable around the rotation axis 18. However, the brake device having the force transmission mechanism according to the present invention may be a brake device in which the first and second pressing members are rotatable around the rotation axis 18 and the rotations of the first and second pressing members are precluded from exceeding a prescribed value.

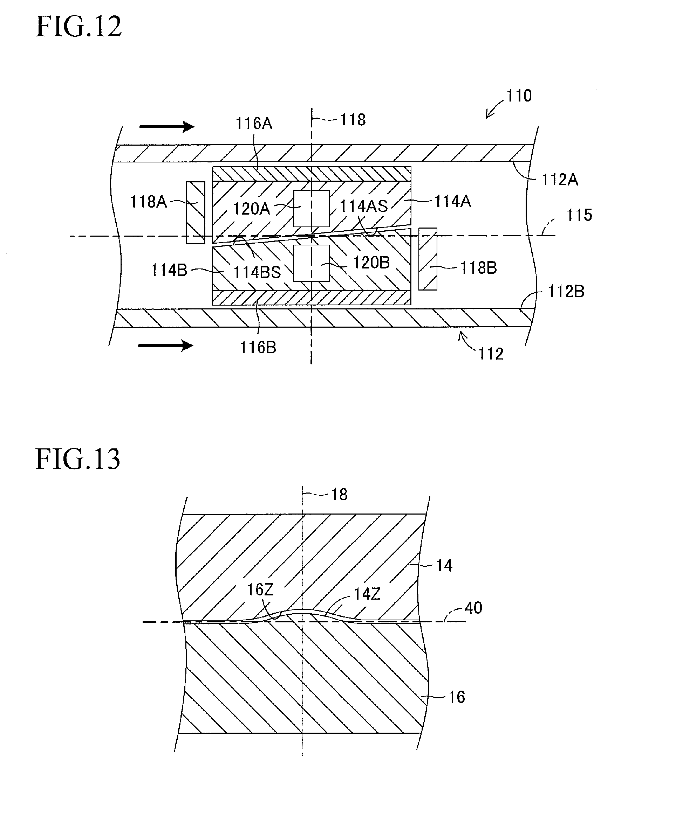

For example, Fig. 12 is an explanatory view of the principal portions of the brake device having the force transmission mechanism as viewed in a radial direction showing the principle of increasing the pressing force in the brake device according to the present invention. In Fig. 12, 110 and 112 denote a brake device and a brake rotor, respectively, which rotate around a rotation axis 118 as shown by an arrow. The brake rotor 112 has a first disk 112A and a second disk 112B spaced apart from each other along the rotation axis 118. A first pressing member 114A and a second pressing member 114B are disposed between the disks 112A and 112B.

A first frictional engagement member 116A is disposed between the first disk 112A and the first pressing member 114A and is supported by the first pressing member 114A. Similarly, a second frictional engagement member 116B is disposed between the second disk 112B and the second pressing member 114B and is supported by the second pressing member 114B. The first and second pressing members 114A and 114B are spaced apart from each other along the rotation axis 118, and have inclined surfaces 114AS and 114BS, which are inclined in the same direction relative to a virtual plane115 perpendicular to the rotation axis 118 and extend in parallel to each other. Notably, the inclined surfaces 114AS and 114BS may contact with each other even during non- braking operation.

A first stationary member 118A and a second stationary member 118B are disposed at positions which are spaced apart from the first and second pressing members 114A and 114B, respectively, in a rotation direction around the rotation axis 118. Notably, the stationary members 118A and 118B may contact with the first and second pressing members 114A and 114B, respectively, during non- braking operation. In addition, a first energizing unit 120A and a second energizing unit 120B are provided in the first and second pressing members 114A and 114B, respectively. During braking operation, one of the first and second energizing units 120A and 120B energize the associated first or second pressing member 114A or 114B against the associated first disk 112A or second disk 112B, respectively.

During non-braking operation, the first and second energizing units 120A and 120B are not actuated. The first and second frictional engagement members 116A and 116B do not contact with the first disk 112A and second disk 112B, respectively, and, accordingly, the brake device110 does not generate any braking force by the frictional force therebetween. The first and second pressing members 114A and 114B do not afford and receive any rotational torque acting around the rotation axis 118 and do not afford and receive any force acting along the rotation axis 118.

In contrast, during braking operation, one of the energizing units 120A and 120B is actuated. For example, when the energizing unit 120A is actuated, the first pressing member 114A is energized toward the first disk 112A and the frictional engagement member 116A is pressed against the disk 112A by the pressing member 114A. When the frictional engagement member 116A frictionally engages with the disk 112A, rotational torque generated by the frictional force between them acts on the frictional engagement member 116A and the pressing member 114A, which displaces the pressing member 114A rightward as viewed in Fig. 15 to engage with the pressing member 114B. As a result, the pressing member 114A drive the pressing member 114B in the direction in which the rotational torque acts, and the pressing member 114B contacts with the stationary member 118B. The pressing members 114A and 114B are prevented from rotating further by the stationary member 118B so that the frictional force between the frictional engagement member 116A and the disk 112A generates a braking force.

The rotational torque is dissolved into force acting around the rotation axis 118 and a force acting along the rotation axis 118 by the wedge action generated by the engagement of the inclined surfaces 114AS and 114BS. As the force acting along the rotation axis 118 acts in the direction separating the pressing members 114A and 114B from each other, the pressing member 114B presses the frictional engagement member 116B against the disk 112B to engage them with each other. Accordingly, the frictional force between the frictional engagement member 116B and the disk 112B also generates braking force. Thus, the pressing members 114A, 114B and the stationary members 118A, 118B cooperate with each other to function as a force transmission mechanism.

Incidentally, when the brake rotor 112 is rotated in the direction opposite to that shown by the arrow, the energizing unit 120B is actuated. The first pressing member 114B is energized toward the first disk 112B and the frictional engagement member 116B is pressed against the disk 112B. In other words, an energizing unit to be actuated is determined in accordance with the rotational direction of the brake rotor 112 so that rotational torque which one of the pressing members receives when the frictional engagement member frictionally engage with the disk is transmitted to the other pressing member.

It is to be understood that as in the above-described first and second embodiments, in a configuration where the inclined surfaces 114AS and114BS have portions inclined in the opposite direction relative to the virtual plane 115, either of the energizing units may be actuated regardless of the rotational direction of the brake rotor 112. In that case, stationary members corresponding to the stationary members 118A and 118B are provided on circumferentially both sides of the pressingmember114A or 114B which is actuated.

While the present invention has been described with reference to the above embodiments, it will be apparent to those skilled in the art that the present invention is not limited thereto, but may be embodied in various other forms without departing from the scope of the invention.

For example, in the above-described first and second embodiments, the cam surfaces 14Z and 16Z of the force transmission mechanism 46 have the curved sections 14ZA and 16ZA and the inclined sections 14ZB, 16ZB, 14ZC and 16ZC which extend on the both sides of the curved sections. However, the cam surfaces 14Z and 16Z of the force transmission mechanism 46 may have another shape so long as it has a pair of surfaces inclined in the same direction relative to the virtual plane 40 perpendicular to the rotation axis 118.

As shown in Fig. 11, for example, the cam surface 14Z may have a mountain shape and the cam surface 16Z may have a volley shape accommodating the cam surface 14Z. In this modification, rolling elements such as balls may be interposed between the cam surfaces of the first and second pressing members. In addition, as shown in Fig. 12, the inclined sections 14ZB, 16ZB, 14ZC and 16ZC which extend on the both sides of the curved sections may be curved so that their inclination relative to the virtual plane 40 gradually decreases with the distances from the associated curved sections. Similarly, in the third embodiment, the side surfaces of the wedge members 96 and 98 may be curved so that their inclination relative to the virtual plane 40 gradually decreases with the distances from the top bases to the bottom bases of the trapezoids.

In the configuration where, as in the first and second embodiments, rolling elements such as balls 38 are interposed between the cam surfaces of the first and second pressing members, the inclined sections of only one of the cam surfaces may be curved so that their inclination relative to the virtual plane 40 gradually decreases with the distances from the associated curved sections. Incidentally, rolling elements may be column rollers or tapered rollers.

According to these modifications, the component of the force which is derived by dissolving a rotational torque in the direction along the rotation axis 18 can gradually be increased as the relative displacements of the first and second pressing members 14 and 16 or the wedge members 96 and 98. As a result, a braking property of the brake device can be made progressive.

While in the above-described first and second embodiments, the cam surfaces 14Z and 16Z have the curved sections 14ZA and 16ZA, respectively, they may consist of only the inclined sections 14ZB, 16ZB, 14ZC and 16ZC. In that configuration, the areas where the inclination relative to the virtual plane 40 is 0 are the positions where the inclined sections 14ZB and 14ZC, and 16ZB and 16ZC intersect, respectively.

In the above-described embodiments other than the second embodiment, the first and second frictional engagement members are integrally formed with the first and second pressing members 14 and 16 or the wedge members 96 and 98 as the frictional engagement portions 14A and 16A. In these embodiments, however, at least one of the first and second frictional engagement members may be a member separate from the pressing member or the wedge member.

In the above-described first to third embodiments, the frictional engagement portions 14A and 16A have the same size. However, these may have different sizes and diameters.

In the above-described embodiments, the cylindrical part 20B is integrally formed with the disk part 20A so as to form the main rotor 20. However, the cylindrical part 20B may integrally be formed with the sub-rotor 22 and, alternatively, the disk part 20A, the disk part 20A and the sub-rotor 22 may be separate members.

While in the above-described first and third embodiments, the main rotor 20 and the sub-rotor 22 cooperate with the rotating shaft 17, the wheel carrier member 28 and the seal member 42 to define a closed space 44, they may not define a closed space.

Notably, in the above-described first and third embodiments, the first pressing member 14, the second pressing member 16 and frictional engagement members are accommodated in the closed space 44. Accordingly, as compared to where the pressing members and the likes are not accommodated in the closed space, the members are liable to increase in temperature during the operation of the brake device 10. However, if the frictional engagement members are made from a ceramic base frictional material, a decrease in the braking force due to the temperature rise is small. In a configuration where the pressing members and the likes are accommodated in a closed space, the main rotor 20 and the sub-rotor 22 may be provided with cooling fins so that the members be restrained from increasing in temperature.

While in the above-described first and third embodiment, the first pressing member 14 is energized toward the disk part 20A by the electromagnetic force of the solenoid 34. However, the means for energizing a pressing member may be a hydraulic means which is similar to that in the second embodiment, for example. In addition, while in the above-described embodiments, the brake device is one for a vehicle, the brake device according to the present invention may be applied to any application other than a vehicle.

## Claims

1. A friction brake device comprising:
a brake rotor having first and second disk parts which are spaced apart from each other along a rotation axis and extend annularly around said rotation axis, and a connection part which integrally connects the outer peripheral portions of said first and second disk parts; and
first and second friction members which extend annularly around said rotation axis between said first and second disk parts and are supported by a stationary member so that said friction members can displace relative to said first and second disk parts along said rotation axis but the rotations of said friction members around said rotation axis are restricted;
a pressing device disposed between said first and second friction members which presses said first and second friction members against said first and second disk parts, respectively, and transmits the reaction force that one of said friction members receives from one of said disk parts to the other disk part by way of the other friction member.

2. The friction brake device according to claim 1, wherein said pressing device conducts said pressing of said first and second friction members and said transmission of the reaction force at a plurality of positions spaced apart circumferentially around said rotation axis.

3. The friction brake device according to claim 2, wherein
said first friction member is supported by said stationary member so as to rotate relative to said second friction member around said rotation axis, and said second friction member is supported by said stationary member so as not to rotate around said rotation axis;
said pressing device includes a pressing force control mechanism that controls the force with which at least said first friction member is pressed against said first disk part, and a plurality of force transmission mechanisms which are disposed around said rotation axis as spaced apart from each other and transmits the force between said first and second friction members; and
said force transmission mechanisms trasnsmit the rotational torque around said rotaion axis between said first and second friction members, transform the rotational torque into the force acting in the direction of separating said first and second friction members from each other along said rotaion axis through the use of the wedge action generated by means of said first and second friction members being relatively rotated around said rotation axis, and transmit the reaction force received by said first and second friction members mutually between said first and second friction members.

4. The friction brake device according to claim 3, wherein said pressing force control mechanism includes a solenoid which is supported by said first friction member and annularly extends around said rotation axis, and controls the force with which said first friction member is pressed against said first disk part by the electromagnetic force generated by means of said solenoid being electrically energized.

5. The friction brake device according to claim 4, wherein said pressing force control mechanism includes a piston-cylinder device which is supported by said second friction member and annularly extends around said rotaion axis; said piston-cylinder device has a cylinder chamber and a piston which engages with said first friction member at the tip end; and said pressing force control mechanism controls the pressing force with which said first and second friction members are pressed against said first and second disk parts, respectively, by means of the pressure in said cylinder chamber being increased and decreased.

6. The friction brake device according to claim 1, wherein said pressing device conducts the pressing of said first and second friction members and said transmission of the reaction force over the entire circumference around said rotation axis.

7. The friction brake device according to claim 6, wherein said pressing force control mechanism includes a piston-cylinder device which is supported by one of said first and second friction members and annularly extends around said rotaion axis; said piston-cylinder device has a cylinder chamber and a piston which engages with the other of said first and second friction members at the tip end; and said piston-cylinder device presses said first and second friction members against said first and second disk parts, respectively, by means of the pressure in said cylinder chamber being increased and devreased.

8. The friction brake device according to any one of claims 1 to 7, wherein the ranges in radial direction where said first and second friction members frictionally engage with said first and second disk parts are the same to each other.

9. The friction brake device according to any one of claims 3 to 5, wherein
said force transmission mechanisms have first and second opposed surfaces provided on said first and second friction members, respectively;
said first and second opposed surfaces have areas inclined in the same direction relative to a virtual plane perpendicular to said rotation axis; and
by means of the cooperation of said first and second opposed surfaces, said force transmission mechanisms transmit the rotational torque around said rotation axis between said first and second friction members, transform the rotational torque into the force acting in the direction of separating said first and second friction members from each other along said rotation axis, and transmit the reaction force received by said first and second friction members mutually between said first and second friction members.
